# EUROPÄISCHE PATENTANMELDUNG

(11) **EP 2 402 633 A2**
(43) Veröffentlichungstag der Anmeldung: **04.01.2012**
(21) Anmeldenummer: 11171769.0
(22) Anmeldetag: 28.06.2011
(51) Int. Cl.: F16K 24/04

(54) **Dichtungselement**

(30) Priorität: 30.06.2010 DE 102010017657
(71) Anmelder: LISI AUTOMOTIVE Mecano GmbH, 69123 Heidelberg (DE)
(72) Erfinder: Breuer, Michael, 69151 Neckargemünd (DE); Huck, Thomas, 69226 Nußloch (DE); Nordmann, Michael, 69190 Walldorf (DE)
(74) Vertreter: Katscher Habermann Patentanwälte

(57) **Zusammenfassung**

Ein Dichtungselement (1) für einen Wasserablauf sowie eine Belüftung eines Hohlraums mit einer von einem Öffnungsrand (2) begrenzten Ablauföffnung (3) weist einen Dichtungskörper (9) auf, der die Ablauföffnung (3) nur teilweise ausfüllt und in der Ablauföffnung (3) lagerbar ist, wobei der Dichtungskörper (9) an seinem ersten Ende (10) eine radial vorspringende Dichtlippe (12) aufweist, mittels der die Ablauföffnung (3) verschließbar ist, und an seinem zweiten, dem Hohlraum zugewandten Ende (13) mindestens ein radial vorspringendes Rastelement (14) aufweist.

## Beschreibung

Die Erfindung betrifft ein Dichtungselement für einen Wasserablauf eines Hohlraums, wobei der Wasserablauf eine von einem Öffnungsrand begrenzte Ablauföffnung aufweist.

Um einen Hohlraum, der be- und entlüftet werden soll, vor eindringender Feuchtigkeit schützen zu können ist es aus der Praxis bekannt, dass eine als Ablauföffnung für aus dem Hohlraum ablaufendes Wasser so angeordnet und ausgestaltet ist, dass der Hohlraum be- und entlüftet und eingedrungene Feuchtigkeit oder eingedrungenes Wasser aus dem Hohlraum möglichst ungehindert austreten kann, jedoch beispielsweise Regenwasser oder Spritzwasser von außen kaum oder nicht in den Hohlraum eindringen kann. Sofern der Schutz vor eindringendem Wasser, der allein durch Anordnung und Ausgestaltung der Ablauföffnung an dem Hohlraum bewirkt wird, als nicht ausreichend angesehen und beurteilt wird, kann die Ablauföffnung zusätzlich mit einem Dichtungselement versehen werden, das einen Wasseraustritt möglichst ungehindert zulassen soll, jedoch das Eindringen von beispielsweise Regenwasser oder Spritzwasser in den Hohlraum weitgehend unterbinden soll.

Aus der Praxis sind verschiedene Dichtungselemente bekannt, die entweder unmittelbar in der Ablauföffnung oder benachbart zu der Ablauföffnung an einer Außenwand des Hohlraums befestigt bzw. festgelegt werden können. Derartige Dichtungselemente weisen oftmals eine oder mehrere Dichtlippen auf, die je nach Ausgestaltung des Dichtungselements formstabil, elastisch oder flexibel ausgestaltet sein können und die Ablauföffnung teilweise oder vollständig überlappen und abdecken. Bei einem Dichtungselement mit formstabilen oder steifen, nur schwer verformbaren Dichtlippen wird das austretende Wasser oftmals einem Entwässerungskanal zugeführt, dessen der Außenseite zugewandte Mündung durch eine beabstandet zu der Mündung angeordnete und diese zumindest teilweise überlappende Dichtlippe oder durch mehrere Dichtlippen gegenüber eindringendem Regenwasser oder Spritzwasser abgeschirmt ist. Aus der Praxis ist ein Dichtungselement bekannt, das in der Ablauföffnung angeordnet werden kann und zwei Dichtlippen aufweist, die eine Mündung eines Entwässerungskanals teilweise abdecken. Ein derartiges Dichtungselement ermöglicht auch eine kontinuierliche Be- und Entlüftung des Hohlraums.

Es sind aus der Praxis auch Dichtungselemente bekannt, die neben der Ablauföffnung an einer Außenwand des Hohlraums festgelegt werden und eine elastische oder flexible leicht verformbare Dichtlippe aufweisen, die von austretendem Wasser verformt und geöffnet werden kann, jedoch ohne äußere Krafteinwirkung die Ablauföffnung flüssigkeitsdicht verschließt. Durch eine geeignete Formgebung und Materialwahl der Dichtlippe kann zudem gewährleistet werden, dass ein gegebenenfalls in dem Hohlraum entstehender Überdruck ausgeglichen werden kann und eine Entlüftung des Hohlraums gewährleistet werden kann.

Derartige Dichtungselemente benötigen oftmals in einer Umgebung der Ablauföffnung ausreichend Platz, um eine Dichtlippe so anzuordnen und befestigen zu können, dass eine möglichst ungehinderte Verformung der elastischen oder flexiblen Dichtlippen gewährleisten zu können. Zudem müssen hochwertige und damit kostspielige Materialien verwendet werden, damit die Dichtlippe auch über einen langen Zeitraum die vorgesehenen flexiblen und insbesondere elastischen Eigenschaften beibehält. Einige der aus der Praxis bekannten Dichtungselemente sind zudem vergleichsweise anfällig gegenüber Verschmutzung und Umweltbedingungen wie beispielsweise Frost, Hitze oder Kälte, so dass diese Dichtungselemente hinsichtlich ihrer Verwendungsmöglichkeiten eingeschränkt sind.

Es wird deshalb als eine Aufgabe des vorliegenden Erfindungsgedankens angesehen, ein Dichtungselement der eingangs genannten Gattung so auszugestalten, dass mit möglichst einfachen und kostengünstigen Mitteln ein möglichst unempfindliches und lediglich einen geringen Raumbedarf erforderndes Dichtungselement hergestellt und bereitgestellt werden kann.

Diese Aufgabe wird erfindungsgemäß dadurch gelöst, dass das Dichtungselement einen Dichtungskörper aufweist, der die Ablauföffnung nur teilweise ausfüllt und in der Ablauföffnung lagerbar ist, wobei der Dichtungskörper an seinem ersten Ende eine radial vorspringende Dichtlippe aufweist, mittels der die Ablauföffnung verschließbar ist, und an seinem zweiten, dem Hohlraum zugewandten Ende mindestens ein radial vorspringendes Rastelement aufweist.

Da der Dichtungskörper die Ablauföffnung nur teilweise ausfüllt und demzufolge ein Teil der Ablauföffnung durch den Dichtungskörper nicht verschlossen werden kann, kann durch den nicht verschlossenen Teil der Ablauföffnung Wasser aus dem Hohlraum entlang des Dichtungskörpers entlang fließen und bei einer die Ablauföffnung nicht flüssigkeitsdicht verschließenden Dichtlippe durch die Ablauföffnung abfließen. Zudem wird eine nahezu ungehinderte Be- und Entlüftung des Hohlraums gewährleistet. Wenn dagegen durch die Dichtlippe der von dem Dichtungskörper nicht ausgefüllte Teilbereich der Ablauföffnung verschlossen, bzw. abgedeckt wird, kann kein Wasser in den Hohlraum eindringen oder aus diesem austreten. Durch eine geeignete Formgebung der Dichtlippe kann gewährleistet werden, dass die Ablauföffnung für austretendes Wasser durchlässig bleibt, bzw. ausreichende Öffnungen für austretendes Wasser bestehen und der Hohlraum belüftet werden kann, während das Eindringen von Regenwasser oder Spritzwasser weitgehend vermieden werden kann.

Der Dichtungskörper wird vorzugsweise von einer Außenseite aus mit dem mindestens einen radial vorspringenden Rastelement in die Ablauföffnung eingebracht, bis das mindestens eine radial vorspringende Rastelement den Öffnungsrand hintergreift. An dem der Außenseite zugewandten Ende des Dichtungskörpers ist die ebenfalls radial vorspringende Dichtlippe vorzugsweise so angeordnet und ausgestaltet, dass sie den Öffnungsrand überlappt und dadurch zumindest teilweise den von dem Dichtungskörper nicht ausgefüllten Teil der Ablauföffnung abdeckt. Das Dichtungselement wird durch das radial vorspringende Rastelement sowie durch die ebenfalls radial vorspringende Dichtlippe, die zu beiden Seiten der Ablauföffnung den Öffnungsrand umgreifen, in der Ablauföffnung festlegt.

Um einen weitgehend ungehinderten Ablauf von Wasser aus dem Hohlraum zu ermöglichen, kann die Dichtlippe formstabil ausgestaltet und mit Entwässerungsschlitzen oder Ablaufkanälen versehen sein. Die Dichtlippe kann auch beispielsweise gewellt ausgeführt sein, so dass in den nicht dicht an dem Öffnungsrand anliegenden Bereichen der Dichtlippe ein Wasseraustritt möglich ist. Es ist ebenfalls denkbar, dass die Dichtlippe aus einem elastischen und ausreichend leicht verformbaren Material besteht und so ausgestaltet ist, dass das aus dem Hohlraum austretende Wasser die Dichtlippe verformen und durch die dann frei werdende Ablauföffnung austreten kann, während von außen an die Ablauföffnung auftreffendes Regenwasser oder Spritzwasser die Dichtlippe gegen den Öffnungsrand drückt und die Ablauföffnung dadurch flüssigkeitsdicht verschließt.

Gemäß einer besonders vorteilhaften Ausgestaltung des Erfindungsgedankens ist vorgesehen, dass der Abstand zwischen dem mindestens einen Rastelement und der Dichtlippe größer als die Dicke des Öffnungsrandes ist. Als Dicke des Öffnungsrandes wird dabei der Abstand zwischen einer Außenseite und einer Innenseite einer den Öffnungsrand bildende Seitenwand des Hohlraums angesehen. Indem der Abstand zwischen dem mindestens einen Rastelement und der Dichtlippe größer als die Dicke des Öffnungsrandes vorgegeben wird, kann das Dichtungselement in axialer Richtung, also senkrecht zu einer an den Öffnungsrand angrenzenden Wandfläche der Seitenwand verlagert werden. Wenn Wasser aus dem Hohlraum austreten will oder auf Grund der aktuellen Druckverhältnisse Luft aus dem Hohlraum austreten soll, wird das Dichtungselement nach außen verlagert, bis das mindestens eine radial vorspringende Rastelement an einer Innenseite des Öffnungsrandes anschlägt und die radial vorspringende Dichtlippe einen Abstand zu einer Außenseite des Öffnungsrandes aufweist. Das Dichtungselement gibt dadurch die Ablauföffnung frei, so dass Wasser oder Luft durch einen Spalt zwischen der Dichtlippe und der Außenseite des Öffnungsrandes austreten können.

Sobald in dem Hohlraum ein merklicher Unterdruck entsteht, wie er beispielsweise durch den Fahrtwind während der Fahrt erzeugt werden kann, verlagert sich das Dichtungselement durch die Ablauföffnung hindurch nach innen und verschließt dadurch selbsttätig die Ablauföffnung.

Auch wenn von außen Wassertropfen auf das Dichtungselement auftreffen, wird das Dichtungselement nach innen verlagert, bis die radial vorspringende Dichtlippe eng an der Außenseite des Öffnungsrands anliegt und die Ablauföffnung dicht verschließt.

Durch die axiale Verlagerung des Dichtungselements ist eine Verformung der Dichtlippe nicht mehr notwendig. Das Dichtungselement kann einstückig und einheitlich aus einem Material hergestellt werden, das während der Nutzungsdauer des Dichtungselements nicht notwendigerweise bzw. funktionsbedingt verformbar sein muss. Ein derartiges Dichtungselement kann äußerst kostengünstig beispielsweise mit einem Spritzgussverfahren aus Kunststoff hergestellt werden und über einen sehr langen Zeitraum wartungs- und verschleißfrei zur Abdichtung einer Ablauföffnung eines Hohlraums verwendet werden.

Ein derartiges axial verlagerbares Dichtungselement kann auch an exponierten Stellen des Hohlraums angeordnet werden, da es unempfindlich gegenüber Wind bzw. Luftströmungen und auch weitgehend unempfindlich gegenüber Verschmutzung ist, da durch die ständige Verlagerung des Dichtungselements Schmutzpartikel an dem Dichtungselement kaum anhaften können bzw. kontinuierlich von dem Dichtungselement wieder abgelöst werden. Da die Dichtlippe nicht sehr dünn und leicht verformbar ausgestaltet sein muss, kann das Dichtungselement hinsichtlich seiner Formgebung und des für die Herstellung verwendeten Materials so ausgestaltet und vorgegeben werden, dass das Dichtungselement auch gegenüber Hitze, Kälte und Frost weitgehend unempfindlich ist.

Vorzugsweise ist das Dichtungselement so ausgestaltet, dass der Dichtungskörper allseitig einen Abstand zu dem Öffnungsrand aufweist. Eine Querschnittsfläche des Dichtungskörpers ist dabei zweckmäßigerweise so an die Formgebung und eine Querschnittsfläche der Ablauföffnung angepasst, dass bei einer mittigen Anordnung der Dichtungskörper allseitig einen näherungsweise gleich großen Abstand zu dem Öffnungsrand aufweist. Bei einer kreisrunden Ablauföffnung ist der Dichtungskörper im Wesentlichen zylinderförmig bzw. stabförmig ausgestaltet, wobei der Durchmesser des Dichtungskörpers kleiner als der Durchmesser der Ablauföffnung ist. Es können jedoch auch andere Formgebungen der Ablauföffnung zweckmäßig und vorteilhaft sein und der Dichtungskörper hinsichtlich seiner Formgebung und Abmessungen daran angepasst ein.

Durch eine geeignete Formgebung des mindestens einen radial vorspringenden Rastelements und der an dem entgegengesetzten Ende radial vorspringenden Dichtlippe kann bewirkt und gewährleistet werden, dass der Dichtungskörper regelmäßig die dafür vorgesehene Position innerhalb der Ablauföffnung einnimmt.

Gemäß einer vorteilhaften Ausgestaltung des Erfindungsgedankens ist vorgesehen, dass das Dichtungselement drei oder mehr längs seiner Umfangslinie an dem Dichtungskörper beabstandet zueinander angeordnete Rastelemente aufweist. Die Rastelemente sind zweckmäßigerweise drei oder vier gleichmäßig beabstandete Rastnasen, deren maximale radiale Erstreckung größer als der Durchmesser der Ablauföffnung ist, so dass ein unbeabsichtigtes Ablösen und Herausfallen des Dichtungselements aus der Ablauföffnung heraus zuverlässig verhindert wird. Zwischen den beabstandet zueinander angeordneten Rastelementen kann Wasser aus dem Hohlraum an dem Dichtungskörper entlang durch die Ablauföffnung abfließen und aus dem Hohlraum austreten.

Die Anzahl und die Ausgestaltung der einzelnen Rastelemente werden demzufolge zweckmäßigerweise in Abhängigkeit von der Größe der Ablauföffnung, der angestrebten Rückhaltekraft des Dichtungselements in der Ablauföffnung und dem für einen effizienten Ablauf des aus dem Hohlraum austretenden Wassers benötigten Öffnungsquerschnitt vorgegeben.

Um eine zuverlässige Abdichtung der Ablauföffnung weitgehend unabhängig von der jeweiligen Lage des Dichtungselements innerhalb der Ablauföffnung gewährleisten zu können ist vorgesehen, dass die Dichtlippe ringförmig ausgestaltet ist und den Öffnungsrand allseitig überlappt. Der Überlappungsbereich zwischen der Dichtlippe und dem Öffnungsrand kann dabei ausreichend große bemessen sein, so dass selbst bei einer abstehenden Dichtlippe durch einen von der Dichtlippe begrenzten langen und schmalen Spalt zwischen der Dichtlippe und dem Öffnungsrand effektiv verhindert werden kann, dass Regentropfen und Spritzwasser durch diesen Spalt hindurch in den Hohlraum eindringen können.

Um eine Herstellung zu vereinfachen und eine Montage des Dichtungselements zu erleichtern kann vorgesehen sein, dass das Dichtungselement ein formschlüssig oder kraftschlüssig in den Öffnungsrand einsetzbares Führungselement mit einer im Wesentlichen hohlzylinderförmigen Ausnehmung aufweist, in der das Dichtungselement axial verlagerbar angeordnet ist. Gleichzeitig kann durch ein derartiges Führungselement in einfacher Weise eine für die Dichtwirkung sowie für den Wasseraustritt vorteilhafte Formgebung im Bereich des Öffnungsrandes vorgegeben werden, ohne dass der Öffnungsrand bzw. die angrenzenden Wandbereiche des Hohlraums hinsichtlich ihrer Formgebung angepasst oder bearbeitet sein müssen. Das Dichtungselement kann vorgefertigt in das Führungselement eingesetzt sein, so dass für eine Montage des Dichtungselements in der Ablauföffnung lediglich das Führungselement in den Öffnungsrand eingesetzt oder im Bereich des Öffnungsrandes festgelegt werden muss.

Ein weiterer Vorteil bei der Verwendung eines Führungselements kann darin gesehen werden, dass unabhängig von der jeweiligen Formgebung der Ablauföffnung jeweils ein in seiner Formgebung identisch übereinstimmendes Dichtungselement verwendet werden kann und lediglich die äußeren Abmessungen des Führungselements an die jeweilige Ablauföffnung angepasst sein muss. Die Formgebung der Ausnehmung und die Formgebung des Dichtungselements können unabhängig von der jeweiligen Formgebung der Ablauföffnung optimiert und einheitlich vorgegeben werden.

Es ist natürlich ebenfalls möglich, dass das Führungselement ein nachträglich befestigbarer oder ein integraler Bestandteil eines größeren Bauteils ist, in dem das Dichtungselement vormontiert und gelagert werden kann. Anschließend kann das Dichtungselement zusammen mit dem größeren Bauteil in einem einzigen Montageschritt an einem Fahrzeug befestigt werden. Gegebenenfalls kann auch auf ein Führungselement vollständig verzichtet und das Dichtungselement unmittelbar in einer geeignet ausgestalteten Ablauföffnung eines Hohlraums gelagert und festgelegt werden.

Um einen Wasseraustritt zu erleichtern und gleichzeitig eine Dichtwirkung des Dichtungselements bei dicht an dem Öffnungsrand anliegenden Dichtlippen zu gewährleisten ist vorgesehen, dass das Führungselement näherungsweise torusförmig ausgestaltet ist und eine näherungsweise trapezförmige, sich zu der Ausnehmung hin verjüngende Querschnittsfläche aufweist. Durch die auf der Innenseite des Hohlraums zu dem Dichtungskörper hin abfallende Fläche des Führungselements wird das sich in dem Hohlraum im Bereich der Ablauföffnung ansammelnde Wasser in Richtung des Dichtungskörpers und er von dem Dichtungskörper nicht ausgefüllten Bereiche der Ablauföffnung geführt und dadurch effektiv abgeführt. An der Außenseite wird durch den ebenfalls schrägen Verlauf des Spaltes zwischen dem Führungselement und der Dichtlippe eine bessere Dichtwirkung ermöglicht.

Vorzugsweise ist vorgesehen, dass der Dichtungskörper mit der Dichtlippe und das Führungselement aus verschiedenen Materialien mit einer unterschiedlichen Härte bestehen. Der Dichtungseffekt kann auf diese Weise zusätzlich verbessert werden, da entweder eine weiche Dichtlippe sich an einer harten Außenseite des Führungselements anschmiegt oder aber eine harte Dichtlippe an eine weiche Außenseite des Führungselements angepresst wird. Fertigungstechnisch unvermeidbare Unebenheiten können auf diese Weise ausgeglichen werden.

Nachfolgend wird ein Ausführungsbeispiel näher erläutert, das in der Zeichnung dargestellt ist. Es zeigt:
Fig. 1 eine teilweise angeschnitten dargestellte Schrägansicht eines Dichtungselements mit einem Führungselement, wobei der Dichtungskörper sich in einer geöffneten, einen Wasseraustritt ermöglichenden Position befindet,
Fig. 2 eine Schnittansicht des in Fig. 1 dargestellten Dichtungselements längs der Linie II-II in Fig. 1,
Fig. 3 eine Schnittansicht gemäß Fig. 2, wobei sich der Dichtungskörper in einer geschlossenen, einen Wasseraustritt aus dem Hohlraum verhindernden Position befindet,
Fig. 4 eine Schnittansicht eines Befestigungsclips mit einem darin angeordneten Dichtungselement gemäß den Fig. 1 bis 3,
Fig. 5 eine vergrößerte Darstellung eines Teilbereichs V der Schnittansicht gemäß Fig. 4, und
Fig. 6 eine teilweise geschnitten dargestellte Schrägansicht von unten des in den Fig. 4 und 5 dargestellten Befestigungsclips.

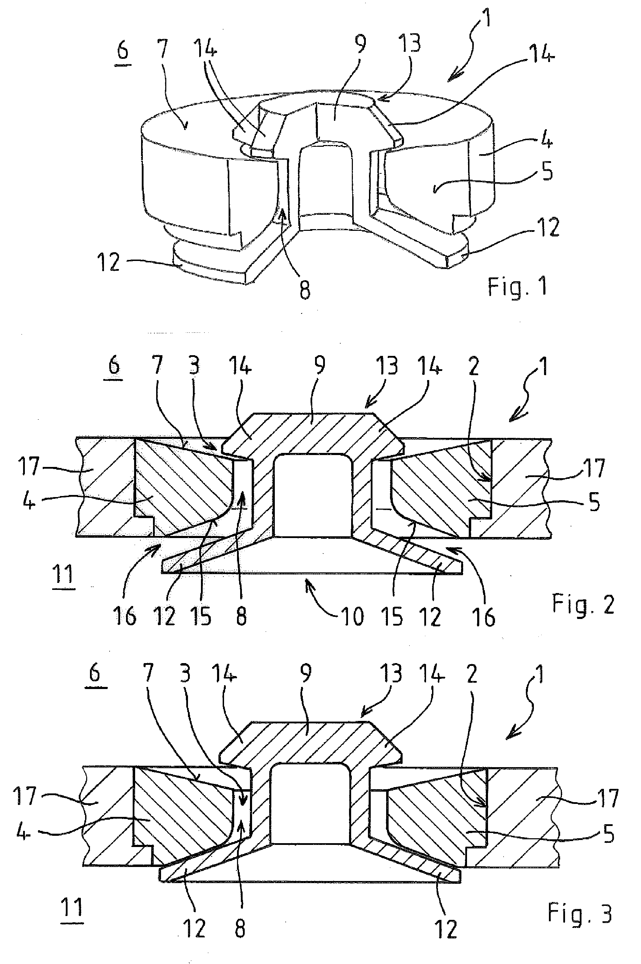

In den Figuren 1 bis 3 ist ein im Wesentlichen rotationssymmetrisch ausgestaltetes Dichtungselement 1 abgebildet, das in eine von einem kreisrunden Öffnungsrand 2 begrenzte Ablauföffnung 3 eingesetzt ist. Das Dichtungselement 1 weist ein torusförmiges Führungselement 4 auf, dessen äußere Umfangsfläche an den Öffnungsrand 2 angepasst ist und dicht an diesem anliegt. Eine Querschnittsfläche 5 des Führungselements 4 ist näherungsweise trapezförmig ausgestaltet und weist an einer Innenseite 6 eines nicht näher dargestellten Hohlraums eine zur Mitte hin abfallende Außenfläche 7 auf.

In dem Führungselement 4 ist mittig eine zylinderförmige Ausnehmung 8 angeordnet, in der ein Dichtungskörper 9 axial verlagerbar festgelegt ist. Der Dichtungskörper 9 weist an einem ersten Ende 10, das einer Außenseite 11 des Hohlraums zugewandt ist, eine ringscheibenförmige, in einem Winkel radial abstehende Dichtlippe 12 auf. Die radiale Erstreckung der Dichtlippe 12 ist erheblich größer als ein Durchmesser der zylinderförmigen Ausnehmung 8, so dass eine Verlagerung des Dichtungskörpers 9 mit der radial abstehenden Dichtlippe 12 durch die zylinderförmige Ausnehmung 8 hindurch in Richtung der Innenseite 6 des Hohlraums ausgeschlossen ist.

Der Dichtungskörper 9 weist an einem dem ersten Ende 10 gegenüberliegenden zweiten Ende 13 vier längs einer Umfangslinie des Dichtungskörpers 9 gleichmäßig beabstandet zueinander angeordnete ebenfalls radial vorspringende Rastnasen 14 auf. Jeweils zwei einander gegenüberliegend angeordnet Rastnasen 14 weisen gemeinsam eine größere radiale Erstreckung als der Durchmesser der zylinderförmigen Ausnehmung 8 auf. Die Formgebung und Abmessungen der Rastnasen 14 sind dafür vorgesehen und daran angepasst, dass der Dichtungskörper 9 mit den Rastnasen 14 durch die zylinderförmige Ausnehmung 8 hindurchgeführt und mittig in dem Führungselement 4 festgelegt werden kann.

Der Dichtungskörper 9 ist zusammen mit den Rastnasen 14 und der Dichtlippe 12 einstückig aus einem Kunststoffmaterial hergestellt. Das Führungselement 4 ist ebenfalls einstückig aus einem anderen Kunststoffmaterial hergestellt. Die Härte des für den Dichtungskörper 9 verwendeten Kunststoffmaterials ist geringer als die Härte des für das Führungselement 4 verwendeten Kunststoffmaterials, so dass sich eine vergleichsweise weiche Dichtlippe 12 an eine harte Außenfläche 15 des Führungselements 4 anschmiegt, wenn der Dichtungskörper 9 von der Außenseite 11 des Hohlraums an das Führungselement 4 bzw. an den Öffnungsrand 2 der Austrittsöffnung 3 angedrückt wird. In diesem Zustand bzw. bei dieser Position des Dichtungskörpers 9, die exemplarisch in Fig. 3 dargestellt ist, verschließt die Dichtlippe 12 die zylinderförmige Ausnehmung 8 in dem Führungselement 4 und damit die Ablauföffnung 3 in dem Hohlraum.

Wird dagegen der Dichtungskörper 9 von der Innenseite 6 des Hohlraums aus nach außen gedrückt, bis die Rastnasen 14 auf der der Innenseite 6 des Hohlraums zugewanden Außenfläche 7 des Führungselements 4 anliegen, entsteht zwischen der Außenfläche 15 des Führungselements 4 und der Dichtlippe 12 ein Ringspalt 16, durch den Wasser aus dem Hohlraum kommend seitlich an den Rastnasen 14 und an dem Dichtungskörper 9 ablaufen und durch den Ringspalt 16 aus dem Hohlraum austreten kann.

Die Ablauföffnung 3 und das Dichtungselement 1 werden zweckmäßigerweise räumlich entsprechend der Abbildungen in den Fig. 2 und 3 angeordnet, so dass auf Grund einer Gewichtskraft der Dichtungskörper 9 nach unten in eine geöffnete Position fällt, so dass jederzeit ein ungehinderter Wasseraustritt aus dem Hohlraum und eine Be- und Entlüftung des Hohlraums ermöglicht wird. Sollte dagegen von einer Unterseite kommend Regenwasser oder Spritzwasser auf die Dichtlippe 12 des Dichtungskörpers 9 auftreffen oder ein Unterdruck in dem Hohlraum entstehen, wird der zweckmäßigerweise sehr leicht ausgestaltete Dichtungskörper 9 zusammen mit der Dichtlippe 12 nach oben verlagert, bis die Dichtlippe 12 den Ringspalt 16 und damit die Ablauföffnung 3 verschließt.

Durch die trapezartige Formgebung der Querschnittsfläche 5 des Führungselements 4 wird in Verbindung mit daran angepassten, ebenfalls schräg verlaufenden Führungsflächen der Rastnasen 14 und mit der schräg ausgerichteten Dichtlippe 12 gewährleistet, dass sich der Dichtungskörper 9 selbsttätig zentriert und mittig anordnet. Die Abmessungen der Dichtlippe 12 sind so vorgegeben, dass auch bei einer maximalen Auslenkung des Dichtungskörpers 9 aus einer mittigen Position in der Ausnehmung 8 die Ablauföffnung 3 dicht verschlossen oder freigegeben wird, so dass die Funktionsfähigkeit des Dichtungselements 1 jederzeit gewährleistet werden kann.

In den Fig. 2 und 3 ist zur Veranschaulichung ein jeweils an das Dichtungselement 1 angrenzender Wandbereich 17 einer Seitenwand dargestellt, die den Hohlraum begrenzt und in der das Dichtungselement 1 festgelegt ist. Bei einer geeigneten Ausgestaltung des Dichtungskörpers 9 und der angrenzenden Wandbereiche 17 könnte der Dichtungskörper 9 auch unmittelbar in der Ablauföffnung 3 gelagert und dessen Auslenkung durch die angrenzenden Wandbereiche 17 begrenzt werden.

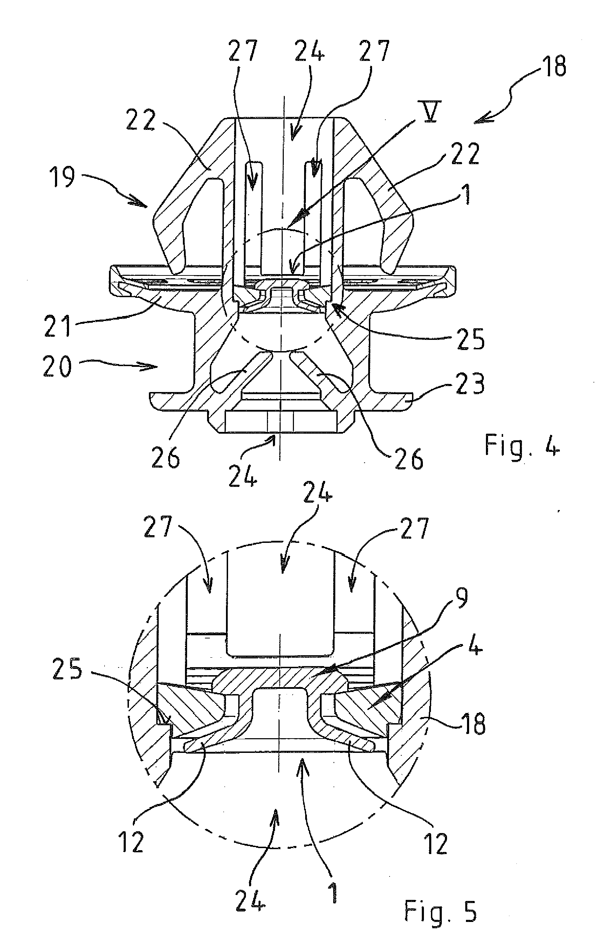

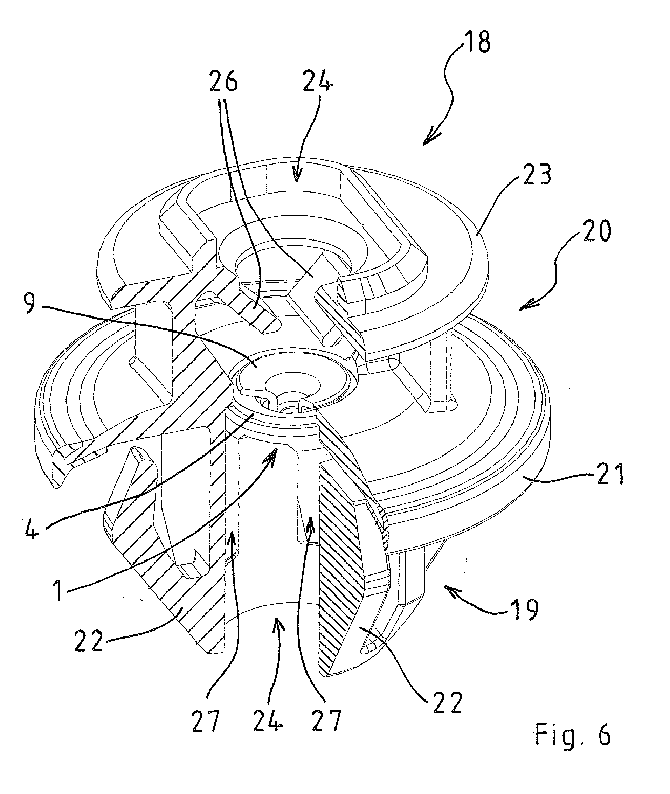

In den Fig. 4 bis 6 ist exemplarisch ein Befestigungsclip 18 für die Befestigung eines Verkleidungselements an einem Karosserieteil eines Fahrzeugs dargestellt, der als größeres Bauteil ein Dichtungselement 1 mit einem Führungselement 4 und einem Dichtungskörper 9 beinhaltet. Der Befestigungsclip 18 weist einen Befestigungsbereich 19 und einen Haltebereich 20 auf, die durch einen Anschlagsflansch 21 voneinander getrennt sind.

In dem Befestigungsbereich 19 weist der Befestigungsclip 18 vier kreuzweise angeordnete, seitlich abstehende Rastnasen 22 auf, die bei einem Einstecken des Befestigungsclips 18 in eine Aufnahmeöffnung in einem Karosserieteil den angrenzenden Randbereich hintergreifen und den Befestigungsclip 18 an dem Karosserieteil festlegen. Durch die Anordnung und Formgebung der Rastnasen 22 kann eine lösbare und erneut verbindbare oder aber eine dauerhafte und nicht mehr zerstörungsfrei lösbare Festlegung ermöglicht, bzw. vorgegeben werden.

An dem Haltebereich 20 ist beabstandet zu dem Anschlagsflansch 21 ein Halteflansch 23 ausgebildet. Ein Verkleidungselement kann zwischen dem Anschlagsflansch 21 und dem Halteflansch 23 beispielsweise formschlüssig oder klemmend aufgenommen und dadurch an dem Karosserieteil befestigt werden.

Der Befestigungsclip 18 weist eine durchgehend ausgestaltete Ausnehmung 24 auf. Die Ausnehmung 24 ist in dem Befestigungsbereich 19 als Bohrung ausgestaltet, die im Bereich des Anschlussflansches 21 von einem radial nach innen vorspringenden Randanschlag 25 begrenzt wird. Die Ausnehmung 24 setzt sich in dem Haltebereich 20 fort, wobei sich der Durchmesser der Ausnehmung 24 zu dem Halteflansch 23 hin zunächst erweitert und dort durch nach innen gerichtete Dichtlippen 26 teilweise abgedeckt wird.

In dem Bereich des Anschlagsflansches 21 befindet sich ein Dichtungselement 1. Ein in der Ausnehmung 24 angeordnetes Führungselement 4 liegt an dem Randanschlag 25 an. In dem Führungselement 4 ist ein Dichtungskörper 9 axial verlagerbar festgelegt, wie es in den Fig. 1 bis 3 im Einzelnen erläutert wurde. Die durchgehende und als Wasserablauf dienende Ausnehmung 24 des Befestigungsclips 18 wird zusätzlich zu den Dichtlippen 26 durch das Dichtungselement 1 zuverlässig gegen (in den Darstellungen gemäß Fig. 4 und 5 von unten) eindringendes Regenwasser oder Spritzwasser geschützt. Gleichzeitig ermöglicht es das Dichtungselement 1 auch, dass die sich in einem Hohlraum eines Karosserieteils ansammelnde Feuchtigkeit (in den Darstellungen gemäß Fig. 4 und 5 von oben kommend) über seitliche Längsschlitze 27 in den Befestigungsbereich 19 des Befestigungsclips 18 eindringen und durch das Dichtungselement 1 und die durchgehende Ausnehmung 24 (in den Darstellungen gemäß Fig. 4 und 5 nach unten) abfließen kann.

Durch den als Bohrung ausgestalteten Bereich der Ausnehmung 24 kann das Führungselement 4 zusammen mit einem darin gelagerten Dichtungskörper 9 nachträglich in einfacher Weise in den Befestigungsclip 18 eingebracht und an der vorgesehenen Position fixiert werden. Es ist ebenfalls denkbar, das Führungselement 4 als einen integralen Bestandteil des Befestigungsclips 18, beispielsweise als geeignet ausgebildeten Randanschlag 25, auszugestalten und den Dichtungskörper 9 oder den Randanschlag 25 aus einem ausreichend elastischen Material auszubilden, so dass der Dichtungskörper 9 nachträglich in den Befestigungsclip 18 eingebracht und in dem Bereich des Randanschlags 25 festgelegt werden kann.

## Patentansprüche

1. Dichtungselement für einen Wasserablauf eines Hohlraums, wobei der Wasserablauf eine von einem Öffnungsrand begrenzte Ablauföffnung aufweist, **dadurch gekennzeichnet, dass** das Dichtungselement (1) einen Dichtungskörper (9) aufweist, der die Ablauföffnung (3) nur teilweise ausfüllt und in der Ablauföffnung (3) lagerbar ist, wobei der Dichtungskörper (9) an seinem ersten Ende (10) eine radial vorspringende Dichtlippe (12) aufweist, mittels der die Ablauföffnung (3) verschließbar ist, und an seinem zweiten, dem Hohlraum zugewandten Ende (13) mindestens ein radial vorspringendes Rastelement (14) aufweist.

2. Dichtungselement nach Anspruch 1, **dadurch gekennzeichnet, dass** ein Abstand zwischen dem mindestens einen Rastelement (14) und der Dichtlippe (12) größer als die Dicke des Öffnungsrandes (2) ist.

3. Dichtungselement nach Anspruch 1 oder Anspruch 2, **dadurch gekennzeichnet, dass** der Dichtungskörper (9) allseitig einen Abstand zu dem Öffnungsrand (2) aufweist.

4. Dichtungselement nach einem der vorangehenden Ansprüche, **dadurch gekennzeichnet, dass** das Dichtungselement (1) drei oder mehr längs einer Umfangslinie an dem Dichtungskörper (9) beabstandet zueinander angeordnete Rastelement (14) aufweist.

5. Dichtungselement nach einem der vorangehenden Ansprüche, **dadurch gekennzeichnet, dass** die Dichtlippe (12) ringförmig ausgestaltet ist und den Öffnungsrand (2) allseitig überlappt.

6. Dichtungselement nach einem der vorangehenden Ansprüche, **dadurch gekennzeichnet, dass** das Dichtungselement (1) ein formschlüssig oder kraftschlüssig in den Öffnungsrand (2) einsetzbares Führungselement (4) mit einer im Wesentlichen hohlzylindrischen Ausnehmung (8) aufweist, in der der Dichtungskörper (9) axial verlagerbar angeordnet ist.

7. Dichtungselement nach Anspruch 6, **dadurch gekennzeichnet, dass** das Führungselement (4) näherungsweise torusförmig oder ringförmig ausgestaltet ist und eine näherungsweise trapezförmige, sich zu der mittig angeordneten Ausnehmung (8) hin verjüngende Querschnittsfläche (5) aufweist.

8. Dichtungselement nach Anspruch 6 oder Anspruch 7, **dadurch gekennzeichnet, dass** der Dichtungskörper (9) und das Führungselement (4) aus verschiedenen Materialien mit einer unterschiedlichen Härte bestehen.
